# DEMANDE DE BREVET EUROPEEN

(11) **EP 1 002 978 A1**
(43) Date de publication de la demande: **24.05.2000**
(21) Numéro de dépôt: 99402755.5
(22) Date de dépôt: 05.11.1999
(51) Int. Cl.: F16L 9/12

(54) **Tuyau multicouche pour le transport de produits chimiques fortement solvantés**

(30) Priorité: 17.11.1998 FR 9814388
(71) Demandeur: Tricoflex S.A., 92500 Rueil Malmaison (FR)
(72) Inventeur: Leray, Fabrice, 51300 Maison en Champagne (FR); Peyrat, Philippe, 51300 Vitry le François (FR); Maitay, Frédéric, 51300 Vitry le François (FR)
(74) Mandataire: Robert, Jean-Pierre

(57) **Abrégé**

Tuyau en matière plastique multicouche pour le transport de produits chimiques fortement solvantés tels que des peintures, caractérisé en ce qu'il comporte de l'intérieur vers l'extérieur une couche (1) d'un alliage polyamide polyoléfine, une couche d'adhésif (2) à base de polyuréthane, une couche de polychlorure de vinyle (3) souple plastifiée et une armature tubulaire (4) au contact du polychlorure de vinyle.

## Description

La présente invention concerne un tuyau multicouche pour le transport de produits chimiques fortement solvantés et plus particulièrement pour le transport des peintures.

Une canalisation en matière plastique présente, par rapport à une canalisation métallique, l'avantage d'être plus souple et de poids beaucoup moins élevé.

Cependant, la matière plastique ne présente pas toutes les qualités d'une canalisation métallique, notamment en ce qui concerne sa résistance chimique au médium qu'elle doit véhiculer ainsi que son aptitude à résister à la pression ou aux agents agressifs de l'atmosphère extérieure.

De nombreuses recherches ont conduit à proposer des tuyaux en matière plastique pour ce type d'application de multiples compositions. Pour certains d'entre eux, on obtient d'excellentes qualités de résistance chimique ou de résistance à la corrosion mais ceux-ci mettent en oeuvre des matières extrêmement nobles, donc extrêmement coûteuses. Le prix de ces tuyaux n'est pas adapté au prix du marché.

Par la présente invention, on propose une structure de tuyau qui possède toutes les qualités de résistance et de barrière des tuyaux réalisés en matière noble sans pour autant en présenter l'inconvénient du coût.

A cet effet l'invention a donc pour objet un tuyau en matière plastique multicouche pour le transport de produits chimiques fortement solvantés tel que des peintures, qui comporte de l'intérieur vers l'extérieur, une couche d'un alliage polyamide polyoléfine, une couche d'adhésif à base de polyuréthane, une couche de polychlorure de vinyle souple plastifié et une armature tubulaire au contact du polychlorure de vinyle.

Des essais ont montré que la couche interne constitue une barrière efficace aux solvants présents dans les peintures tout en présentant une bonne résistance mécanique notamment en fonction de la température. Cependant, comme ce matériau, par exemple connu sur le marché sous le nom d'ORGALLOY (marque déposée), est un matériau coûteux, selon l'invention son épaisseur est limitée entre 0,3 et 1 mm. Aussi, afin de disposer d'un tuyau de bonne qualité mécanique, on propose comme couche à l'extérieur de cette couche interne, essentiellement un polychlorure de vinyle plastifié qui est de faible coût et qui est de grande souplesse.

Pour assurer la liaison entre cette couche de PVC et la couche d'alliage polyamide polyoléfine, on dispose entre les deux une couche de polyuréthane et plus particulièrement de polyuréthane ester la plus fine possible, c'est-à-dire de l'ordre ce 0,2 mm.

Enfin, pour que le tuyau ainsi constitué puisse résister mécaniquement aux sollicitations notamment de pression interne auxquelles il peut être soumis, on aura prévu la mise en place d'une armature en fibre textile ou métallique (guipage, tressage, tricotage...), cette armature pouvant être disposée soit à l'interface du PVC et de la couche de polyuréthane, soit à l'intérieur de la couche de PVC, soit à l'extérieur de celle-ci. Lorsque l'armature est placée à l'intérieur de la couche de PVC, la fabrication par coextrusion demande de mettre en place deux couches successives de PVC entre lesquelles est placée l'armature. Une armature en fil métallique présente l'avantage de rendre le tuyau conducteur et donc de pouvoir assurer la continuité électrique d'un réseau de tuyaux de transport de peinture afin notamment de pouvoir maîtriser l'écoulement des charges électriques et minimiser les risques d'incendie électrique en regard des matières transportées qui sont hautement inflammables. On notera par ailleurs que la nature de l'armature conditionne directement la résistance à l'éclatement du tuyau sous l'effet d'une pression interne. A titre d'exemple, une armature formée d'un guipage simple en fils métallique ou textile offre une résistance à l'éclatement pour des pressions inférieures à 100 - 120 bars. Si on double le guipage, cette résistance peut augmenter à 250 bars. Enfin si l'armature est tressée (simple, double...) on peut fabriquer des tuyaux offrant une résistance à l'éclatement de 600 à 1200 bars.

Le polychlorure de vinyle plastifié pourra être prévu alvéolaire ou non.

De manière facultative, le tuyau tel que défini ci-dessus pourra présenter une dernière couche extérieure de recouvrement faite à partir d'un polyuréthane et destinée à protéger le tuyau des agressions mécaniques, et chimiques venant de l'atmosphère extérieure. Dans une alternative de fabrication d'un tuyau électriquement conducteur, on choisira une couche externe de recouvrement en polyuréthane électriquement conducteur qui allie dans une même couche les qualités de résistance du polyuréthane et celles favorisant l'écoulement des charges électrostatiques.

D'autres caractéristiques et avantages de l'invention ressortiront de la description de quelques modes de réalisation donnée ci-après à titre d'exemples non limitatifs.

Il sera fait référence aux dessins annexés parmi lesquels :
- la figure 1 est une vue en coupe d'un premier mode de réalisation d'un tuyau conforme à l'invention,
- les figures 2 et 3 étant des représentations en coupe de variantes de réalisation de la figure 1.

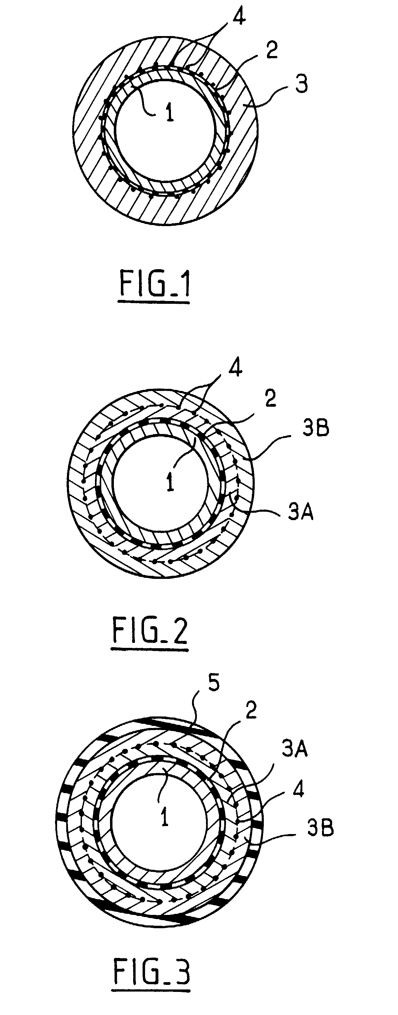

Le procédé de fabrication de chacune des variantes de réalisation du tuyau selon l'invention est une technique bien connue de coextrusion. Le tuyau de la figure 1 comporte une couche interne 1 en alliage polyamide polyoléfine de type ORGALLOY. L'épaisseur de cette couche est comprise entre 0,3 et 1 mm. Cette couche est enrobée d'une couche mince d'épaisseur de l'ordre de 0,2 mm de polyuréthane et plus précisément de polyuréthane ester qui est le corps offrant les meilleures qualités pour joindre la couche interne d'ORGALLOY à la couche externe 3 qui est un polychlorure de vinyle (PVC). Ce polychlorure de vinyle possèdera une épaisseur adaptée au diamètre interne du tuyau comprise par exemple entre 1 et 5 mm. Le PVC plastifié pourra être alvéolaire ou non.

Préalablement à son extrusion sur les couches 1 et 2, on aura disposé par exemple sur la couche 2 une structure de renfort 4 filaire du type guipage, tressage ou tricotage. Cette structure a pour fonction de rendre le tuyau résistant à la pression interne. Alors que dans le cas de la figure 1 elle est située à l'interface du polyuréthane et du PVC, à la figure 2 cette structure de renfort 4 est située entre deux couches 3A et 3B de PVC. En effet, si l'on veut noyer dans une couche de PVC la structure de renfort 4, il convient de procéder à deux extrusions successives de PVC afin de pouvoir disposer cette couche entre les deux.

A la figure 3 on a représenté le tuyau de la figure 2 recouvert d'une couche externe 5 en thermoplastique souple, et plus précisément en polyuréthane qui confère au tuyau une protection externe contre des agents corrosifs de l'atmosphère extérieure qu'ils soient chimiques ou mécaniques. Ce polyuréthane peut être électriquement conducteur comme dit plus haut.

Il est possible, dans une variante non représentée, de disposer l'armature filaire en couche extérieure au tuyau afin de ménager son accès par l'extérieur, ce qui peut être avantageux dans le cas où cette armature est conductrice.

## Revendications

1. Tuyau en matière plastique multicouche pour le transport de produits chimiques fortement solvantés tels que des peintures, caractérisé en ce qu'il comporte de l'intérieur vers l'extérieur une couche (1) d'un alliage polyamide/polyoléfine, une couche d'adhésif (2) à base de polyuréthane, une couche de polychlorure de vinyle (3) souple plastifiée et une armature tubulaire (4) au contact du polychlorure de vinyle.

2. Tuyau selon la revendication 1, caractérisé en ce que l'armature (4) est située à l'interface de la couche de polyuréthane (2) et de la couche de polychlorure de vinyle (3).

3. Tuyau selon la revendication 1, caractérisé en ce que l'armature (4) est située entre une première couche (3A) de polychlorure de vinyle et une seconde couche (3B) de polychlorure de vinyle.

4. Tuyau selon la revendication 1, caractérisé en ce que l'armature (4) est située sur la face externe de la couche de polychlorure de vinyle (3).

5. Tuyau selon l'une des revendications précédentes, caractérisé en ce que l'armature (4) est à base de fil métallique.

6. Tuyau selon l'une des revendications précédentes, caractérisé en ce que la ou les couches de polychlorure de vinyle sont cellulaires.

7. Tuyau selon l'une des revendications précédentes, caractérisé en ce qu'il comporte une couche extérieure (5) à base de polyuréthane.

8. Tuyau selon la revendication 7, caractérisé en ce que la couche extérieure (5) est à base de polyuréthane électriquement conducteur.

9. Tuyau selon l'une des revendications précédentes, caractérisé en ce que la couche interne est d'épaisseur comprise entre 0,3 et 1 mm et la couche de polyuréthane intermédiaire est d'épaisseur égale au plus à 2 dixièmes de millimètre.
